# EUROPEAN PATENT SPECIFICATION

(11) **EP 2 663 707 B1**
(45) Date of publication and mention of the grant of the patent: **15.05.2019**
(21) Application number: 12734669.0
(22) Date of filing: 10.01.2012
(51) Int. Cl.: E05B 65/10, B64D 29/06, E05B 65/00, E05C 3/12, E05C 19/02

(54) **PRESSURE RELIEF LATCH MECHANISM**
DRUCKENTLASTUNGSVERRIEGELUNGSMECHANISMUS
MÉCANISME DE VERROUILLAGE À DÉTENTE DE PRESSION

(30) Priority: 10.01.2011 US 201161431117 P
(43) Date of publication of application: 20.11.2013
(73) Proprietor: Hartwell Corporation, Placentia, CA 92870 (US)
(72) Inventor: JACKSON, Frank T., Placentia California 92870 (US); BILES, Mark R., Placentia California 92870 (US); PHILLIPS, Braskel E., Placentia California 92870 (US)
(74) Representative: Lavoix
(86) International application number: PCT/US2012/020814
(87) International publication number: WO 2012/096986

(56) References cited:
- EP-A2- 1 245 769
- WO-A2-03/106796
- US-A- 2 722 445
- US-A- 3 279 836
- US-A- 5 116 089
- US-A- 5 174 618
- US-A- 5 765 883
- US-A1- 2002 195 827
- US-A1- 2006 214 431
- US-B1- 6 390 518
- US-B1- 6 513 841

## Description

### CROSS REFERENCE TO RELATED APPLICATIONS

This application claims the benefit of priority under 35 U.S.C. § 119 to copending United States Provisional Patent Application No. 61/431,117, filed January 10, 2011.

### BACKGROUND

The present disclosure relates to a pressure relief latch mechanism for releasably latching and/or holding a first member in position with respect to a second member, and in particular to a latch mechanism including a bolt that is movable with respect to a mounting bracket from a latched condition to an unlatched condition in response to an over-pressure condition wherein the bolt is in sealed engagement with the mounting bracket of the latch mechanism when the bolt is in the latched condition and the bolt comprises a front bolt that is selectively coupled to a rear bolt. A latch mechanism is known from US 5,765,883 A, which is considered as being the closest prior art and discloses the preamble of independent claim 1.

### BRIEF DESCRIPTION OF THE DRAWING FIGURES

Fig. 1 is a perspective view of the latch mechanism shown in the latched condition.
Fig. 2 is a perspective view of the latch mechanism shown in the unlatched condition.
Fig. 3 is a top plan view of the latch mechanism shown in the latched condition.
Fig. 4 is a side elevational view of the latch mechanism shown in the latched condition in solid lines and releasably latching a first member to a second member, and shown in the unlatched condition in dashed lines.
Fig. 5 is an end view of the latch mechanism taken along line 5-5 of Fig. 4 without showing the first member.
Fig. 6 is a cross sectional view of the latch mechanism shown in the latched condition taken along line 6-6 of Fig. 3.

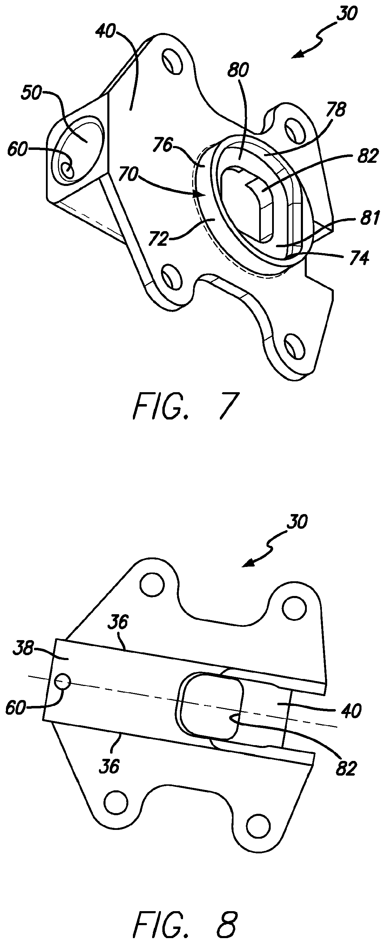

Fig. 7 is a top perspective view of the mounting bracket of the latch mechanism.
Fig. 8 is a bottom perspective view of the mounting bracket of the latch mechanism.

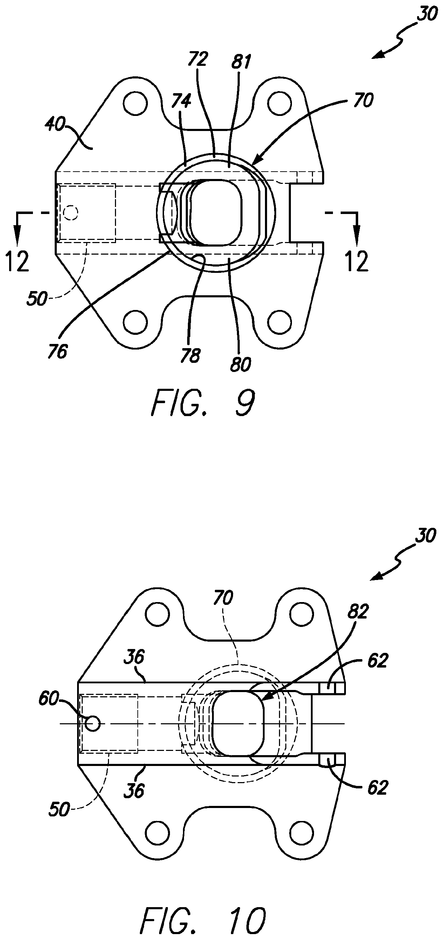

Fig. 9 is a top plan view of the mounting bracket.
Fig. 10 is a bottom view of the mounting bracket.

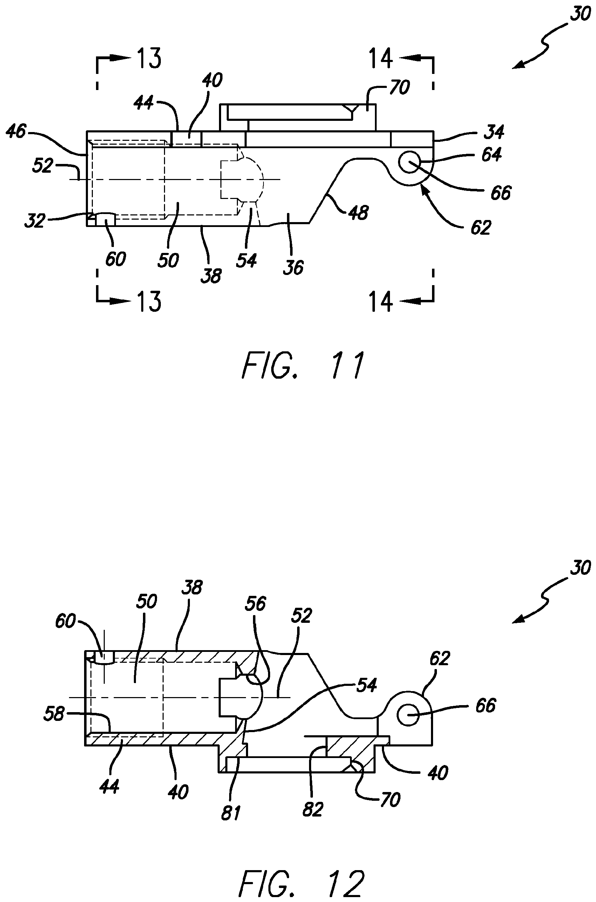

Fig. 11 is a side elevational view of the mounting bracket.
Fig. 12 is a cross sectional view of the mounting bracket taken along line 12-12 of Fig. 9.

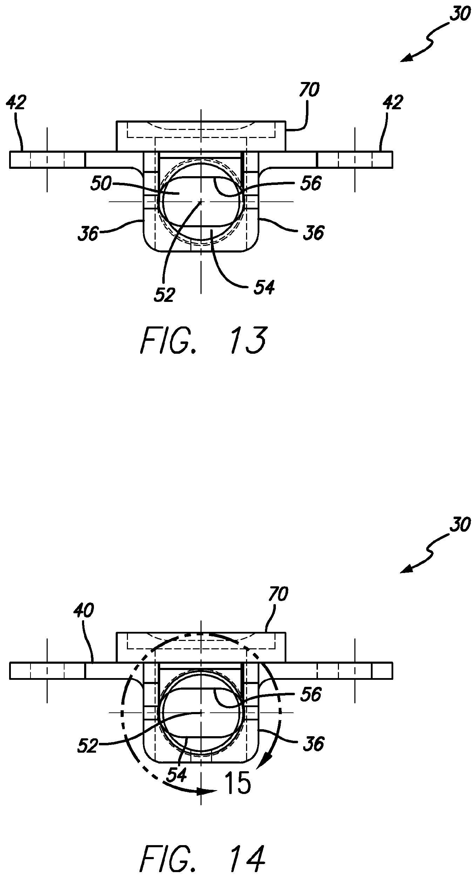

Fig. 13 is an end view of the mounting bracket taken along line 13-13 of Fig. 11.
Fig. 14 is an end view of the mounting bracket taken along line 14-14 of Fig. 11.
Fig. 15 is an enlarged view taken along line 15-15 of Fig. 14.
Fig. 16 is a perspective view of the rear bolt of the bolt.
Fig. 17 is a top plan view of the rear bolt.
Fig. 18 is a left-side elevational view of the rear bolt.

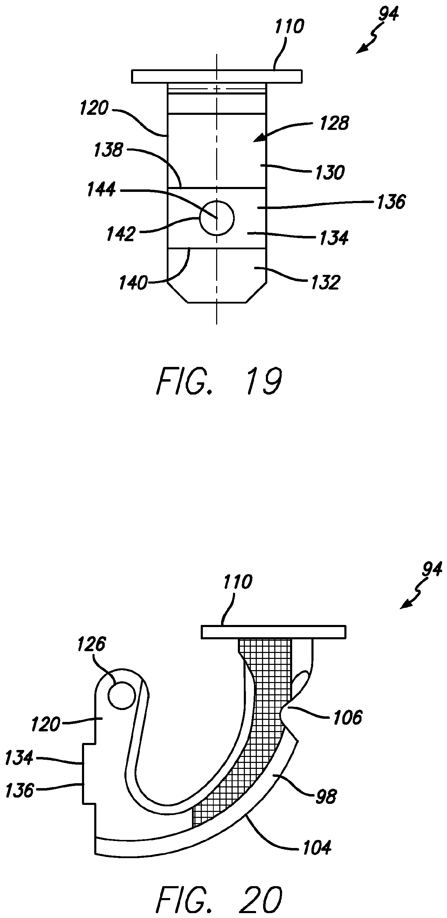

Fig. 19 is a front view of the rear bolt taken along line 19-19 of Fig. 18.
Fig. 20 is a right-side elevational view of the rear bolt.
Fig. 21 is a cross sectional view of the rear bolt taken along line 21-21 of Fig. 17.
Fig. 22 is a perspective view of the front bolt of the bolt.

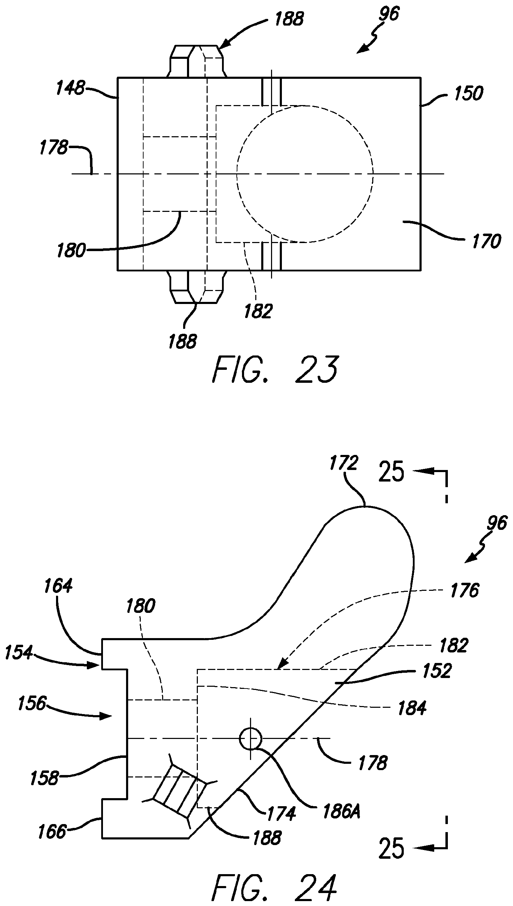

Fig. 23 is a top plan view of the front bolt.
Fig. 24 is a left-side elevational view of the front bolt.

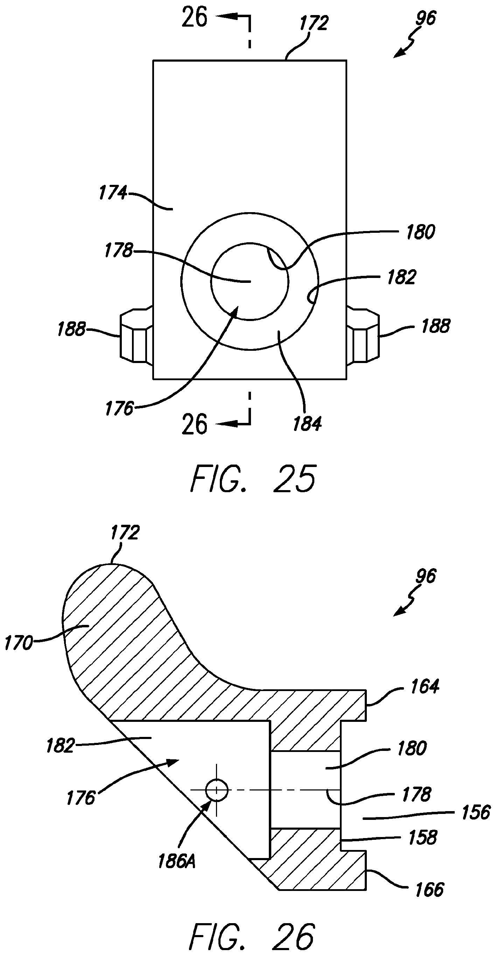

Fig. 25 is the front view of the front bolt taken along line 25-25 of Fig. 24.
Fig. 26 is a cross sectional view of the front bolt taken along line 26-26 of Fig. 25.
Fig. 27 is a top plan view of the sealing gasket.
Fig. 28 is a cross sectional view of the sealing gasket taken along line 28-28 of Fig. 27.
Fig. 29 is a side elevational view of the sealing gasket.
Fig. 30 is a perspective view of the plunger of the biasing mechanism.
Fig. 31 is a side elevational view of the plunger.
Fig. 32 is a front view of the plunger.
Fig. 33 is a top plan view of the detent member.
Fig. 34 is a side elevational view of the detent member.

### DETAILED DESCRIPTION

As shown in the drawing figures, latch mechanism 10 is adapted to releasably latch a first member 12 to a second member 14. First member 12 includes a first surface 16, a second surface 18 and an aperture 20 that extends through first member 12 from first surface 16 to second surface 18. Second member 14 includes a first surface 22 and a second surface 24. Second member 14 may be, for example, an aircraft frame, aircraft engine cowling, or other body member. First member 12 may be, for example, a door or panel that is adapted to be coupled to second member 14 and that is adapted to be removed or displaced with respect to second member 14. First member 12 may be latched in fluid-tight sealing engagement with second member 14.

Latch mechanism 10 includes a mounting bracket 30 that extends between a first end 32 and a second end 34. Mounting bracket 30 includes a pair of generally planar side walls 36 that are spaced apart and generally parallel to one another. A generally planar bottom wall 38 extends between the bottom ends of side walls 36 and is generally perpendicular to side walls 36. A top wall 40 extends between the top ends of side walls 36 and is generally perpendicular to side walls 36. Top wall 40 extends transversely outwardly beyond each side wall 36 to form flanges 42 that extend outwardly from each side wall 36. Each flange 42 includes one or more apertures adapted to receive a fastener for use in attaching mounting bracket 30 in engagement with second surface 18 of first member 12 in alignment with aperture 20. Top wall 40 includes a generally planar top surface 44. Each side wall 36 extends between a first end 46 and a second end 48. Second ends 48 of side walls 36 are spaced inwardly from second end 34 of mounting bracket 30 such that top wall 40 extends from first end 32 to second end 34 outwardly beyond second ends 48 of side walls 36.

An elongate generally cylindrical chamber 50 is formed in mounting bracket 30 between side walls 36, bottom wall 38 and top wall 40. Chamber 50 extends from an opening at first end 32 toward second end 34 of mounting bracket 30 generally concentrically about and along a central longitudinal axis 52. Chamber 50 extends from first end 32 of mounting bracket 30 to an end wall 54. At least a portion of chamber 50 includes an internally threaded side wall 58 that extends into chamber 50 from first end 32 of mounting bracket 30. End wall 54 extends generally transversely between side walls 36, bottom wall 38 and top wall 40. End wall 54 is located between first end 46 and second end 48 of side walls 36. End wall 54 includes an aperture 56 in communication with chamber 50. Aperture 56 may be in the general configuration of an obround, having two parallel sides and two generally semicircular ends. An aperture 60 extends through bottom wall 38 adjacent first end 32 of mounting bracket 30 and is in communication with chamber 50. A pair of transversely spaced apart mounting ears 62 are attached to the bottom surface of top wall 40 and are located adjacent second end 34 of mounting bracket 30. Each mounting ear 62 includes a generally circular aperture 64. Apertures 64 of mounting ears 62 are coaxially aligned with one another about a pivot axis 66 that is transverse to longitudinal axis 52.

Mounting bracket 30 includes a receptacle 70 attached to top surface 44 of top wall 40. Receptacle 70 includes a peripheral side wall 72 that extends upwardly from top surface 44 of top wall 40 to a generally circular rim 74. Side wall 72 includes a generally circular outer surface 76 and a generally D-shaped inner surface 78 comprising a generally linear surface portion and a generally circular surface portion. The generally linear surface portion of inner surface 78 extends generally perpendicular to longitudinal axis 52. Receptacle 70 includes a generally D-shaped chamber 80 formed within inner surface 78. Top wall 40 forms a bottom wall 81 of chamber 80. Bottom wall 81 of chamber 80 includes an aperture 82 in communication with chamber 80 that extends through top wall 40.

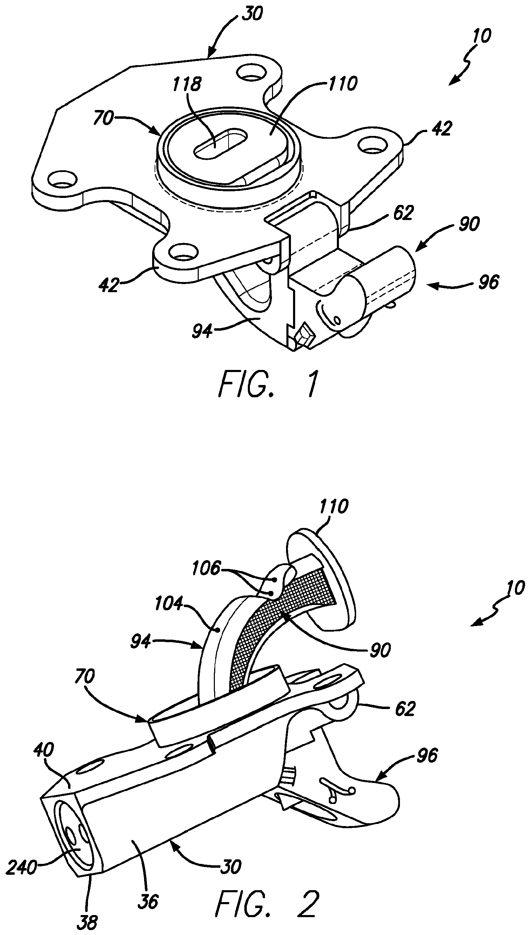

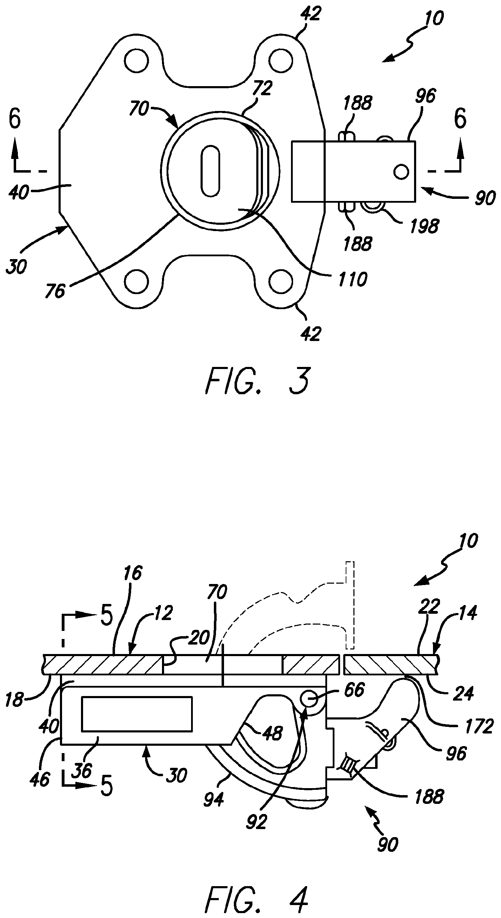

Latch mechanism 10 includes a bolt 90 pivotally coupled to mounting bracket 30 by a shaft 92 that extends concentrically along pivot axis 66 and into apertures 64 of mounting ears 62. As shown in Figs. 1 and 3-6, bolt 90 is in a retracted position with respect to mounting bracket 30 such that latch mechanism 10 is in a latched condition whereby latch mechanism 10 releasably latches first member 12 to second member 14. Bolt 90 is pivotal with respect to mounting bracket 30 about pivot axis 66 from the retracted position as shown in Fig. 1 and in solid lines in Fig. 4 toward an extended position as shown in Fig. 2 and in dashed lines in Fig. 4, wherein latch mechanism 10 is in the unlatched condition and first member 12 may be removed from, or displaced with respect to, second member 14.

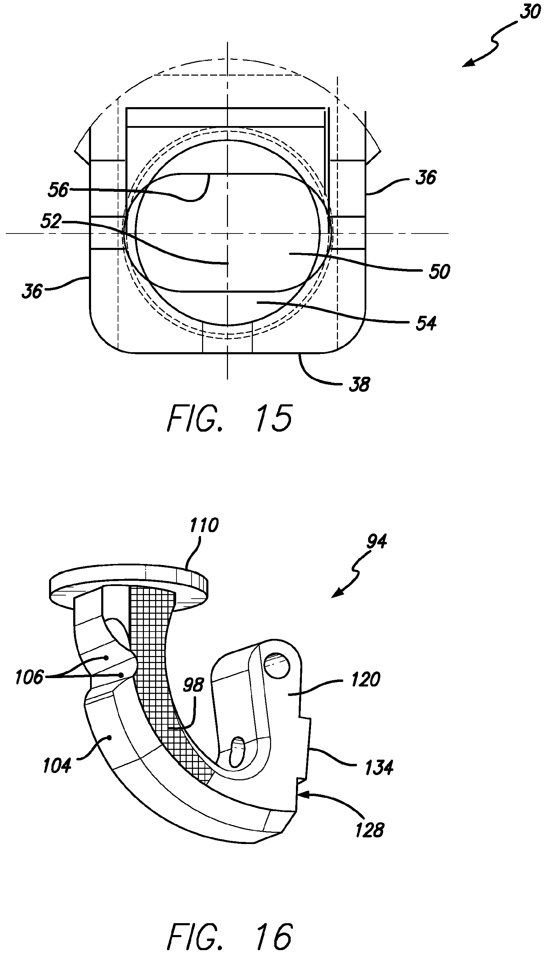

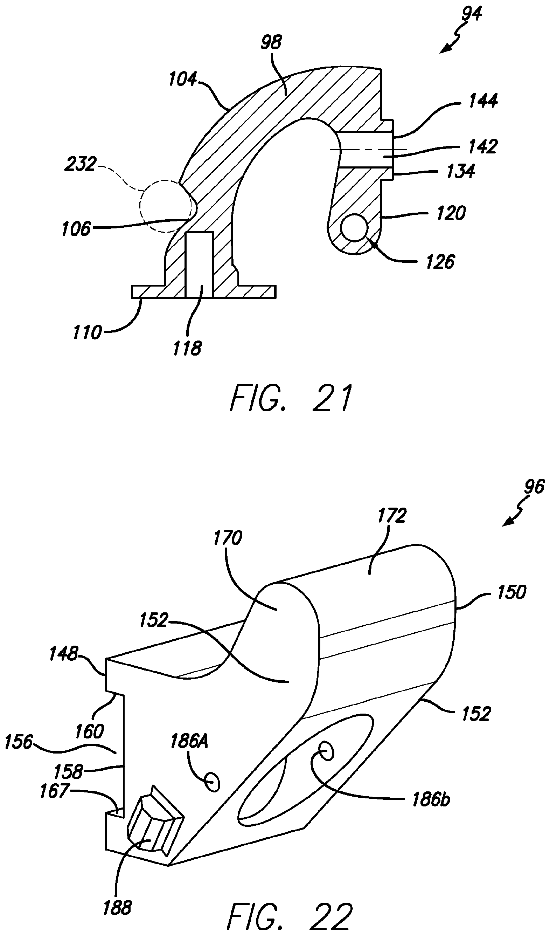

Bolt 90 comprises a rear bolt 94 as shown in Fig. 16 and a front bolt 96 as shown in Fig. 22 which is removably coupled to rear bolt 94. Rear bolt 94 includes a curved arm 98 extending between a first end 100 and a second end 102. Arm 98 extends through aperture 82 in mounting bracket 30. Arm 98 includes a convexly curved outer surface 104 that extends between first end 100 and second end 102. A recess or detent 106 is formed in outer surface 104 adjacent second end 102 of arm 98. Outer surface 104 of arm 98 conforms generally to one or more arcs of a circle between first end 100 of arm 98 and detent 106.

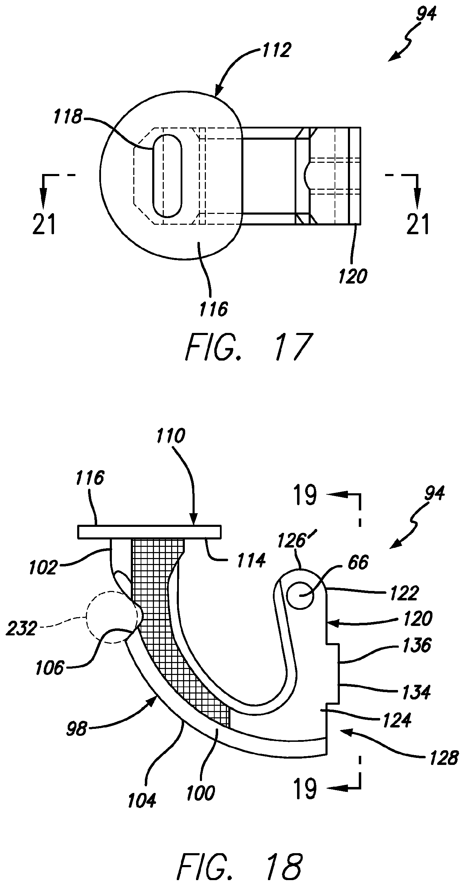

Rear bolt 94 of bolt 90 includes a head 110, generally in the form of a planar plate, attached to second end 102 of arm 98. As shown in Fig. 17, head 110 has a generally D-shaped peripheral edge 112 adapted to generally conform with the D-shaped inner surface 78 of receptacle 70. Head 110 includes a generally planar bottom surface 114 and a spaced apart and generally parallel planar top surface 116. Head 110 is adapted to be located within chamber 80 of receptacle 70 when bolt 90 is in the retracted position and the latch mechanism 10 is in the latched condition. An elongate slot 118 extends downwardly from top surface 116 of head 110 through head 110 and into second end 102 of arm 98. Slot 118 is adapted to receive the tip of tool or implement, such as a screw driver, that may be used to selectively pivot bolt 90 with respect to mounting bracket 30.

Rear bolt 94 also includes a leg 120 that extends from a first end 122 to a second end 124. Second end 124 of leg 122 is attached to first end 100 of arm 98. Leg 120 extends generally transverse to the plane containing head 110. First end 122 of leg 120 includes an aperture 126 adapted to receive shaft 92 such that pivot axis 66 extends concentrically through aperture 126. Shaft 92 pivotally couples rear bolt 94 to mounting bracket 30. Leg 120 includes a front wall 128 having a generally planar top surface 130 and a generally planar bottom surface 132 located generally coplanar with one another. Front wall 128 includes a generally rectangular projection 134 that extends outwardly from top surface 130 and bottom surface 132. Projection 134 is located between top surface 130 and bottom surface 132. Projection 134 includes a generally planar front surface 136 that is generally parallel to top surface 130 and bottom surface 132, and an upper surface 138 and a lower surface 140 that are generally planar and spaced apart and parallel to one another. Upper surface 138 extends generally perpendicular to and between front surface 136 and top surface 130, and lower surface 140 extends generally perpendicular to and between front surface 136 and bottom surface 132. A threaded bore 142 having a central axis 144 extends through front surface 136 of projection 134 and through leg 120.

Front bolt 96 of bolt 90 extends from a first end 148 to a second end 150. Front bolt 96 includes a pair of spaced apart and generally parallel and planar side walls 152 that extend from first end 148 to second end 150. Front bolt 96 includes a rear wall 154 having a generally rectangular recess or slot 156 that extends transversely between side walls 152. Slot 156 is adapted to matingly receive projection 134 of front wall 128 of rear bolt 94. Slot 156 includes a generally planar rear surface 158 adapted to engage front surface 136 of projection 134 of rear bolt 94, a generally planar upper surface 160 and a spaced apart and generally parallel lower surface 162 that extend generally perpendicular to rear surface 158. Upper surface 160 is adapted to be located closely adjacent to upper surface 138 of projection 134 and lower surface 162 is adapted to be located closely adjacent to lower surface 140 of projection 134. Rear wall 154 also includes a generally planar top surface 164 and a generally planar bottom surface 166 that are generally coplanar with one another and generally parallel to rear surface 158. Top surface 164 and bottom surface 166 are located on opposite sides of slot 156. Top surface 164 is adapted to be located closely adjacent to, or in engagement with, top surface 130 of rear bolt 94 and bottom surface 166 is adapted to be located closely adjacent to, or in engagement with, bottom surface 132 of rear bolt 94. If desired, the projection 134 may alternatively be located on rear wall 154 of front bolt 96 and slot 156 may alternatively be located in front wall 128 of rear bolt 94.

Second end 150 of front bolt 96 includes an engagement member 170 having a tip 172 adapted to engage second surface 24 of second member 14 when latch mechanism 10 is in the latched condition. Front bolt 96 also includes an inclined front wall 174. A bore 176 extends through front bolt 96 from front wall 174 to rear surface 158 of slot 156 concentrically about a generally linear axis 178. Axis 178 is aligned generally coaxially with axis 144 of rear bolt 94. Bore 176 includes a first bore portion 180 that extends inwardly from rear surface 158 of slot 156. First bore portion 180 has a first diameter generally equal to the diameter of bore 142 of rear bolt 94. Bore 176 of front bolt 96 also includes a second bore portion 182 that extends from the internal end of first bore portion 180 to front wall 174. Second bore portion 182 has a second diameter which is larger than the first diameter of first bore portion 180. First bore portion 180 and second bore portion 182 are concentrically located about axis 178. A generally annular ledge 184 is formed between first bore portion 180 and second bore portion 182. Apertures 186A and 186B extend from respective side walls 152 to second bore portion 182 and are generally coaxially aligned with one another. Front bolt 96 includes a pair of stop members 188, such as lugs. Each stop member 188 extends outwardly from a respective side wall 152 and is located adjacent first end 148 of front bolt 96 and adjacent a bottom end of front bolt 96.

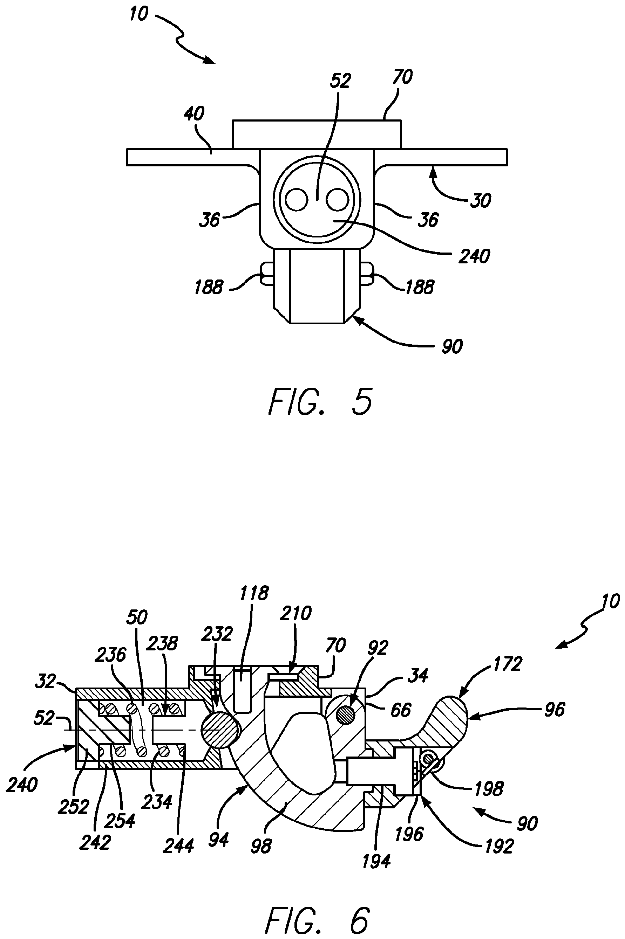

As shown in Fig. 6, front bolt 96 is removably coupled to rear bolt 94. Projection 134 of rear bolt 94 is located within slot 156 of front bolt 96, such that front bolt 96 is interlocked with rear bolt 94. A threaded fastener 192, such as a bolt, removably couples front bolt 96 to rear bolt 94. Fastener 192 includes a threaded generally cylindrical shaft 194 adapted to extend closely within first bore portion 180 of front bolt 96 and to threadably engage bore 142 of rear bolt 94. A head 196 is attached to shaft 194. Head 196 has a diameter that is larger than the diameter of shaft 194 and is adapted to be closely received within second bore portion 182 of front bolt 96. Head 196 of fastener 192 is adapted to engage ledge 184 of front bolt 96 such that threaded fastener 192 presses front bolt 96 into engagement with rear bolt 94 along axis 178 when threaded fastener 192 is tightened. Front bolt 96 is thereby securely coupled to rear bolt 94, while allowing for the removal and replacement of front bolt 96 from rear bolt 94. Front bolt 96 may be removed from rear bolt 94 for repair or replacement by loosening and unscrewing fastener 192 from rear bolt 94. If desired, a lock wire 198 may removably couple fastener 192 to front bolt 96 to prevent unintended rotation and loosening of fastener 192. Lock wire 198 may be connected to front bolt 96 through apertures 186A-B. In addition to allowing for the removal of the front bolt 96 for repair or replacement, different types of front bolts 96 with respectively different types of engagement members 170 may be selectively coupled to rear bolt 94 as conditions may require.

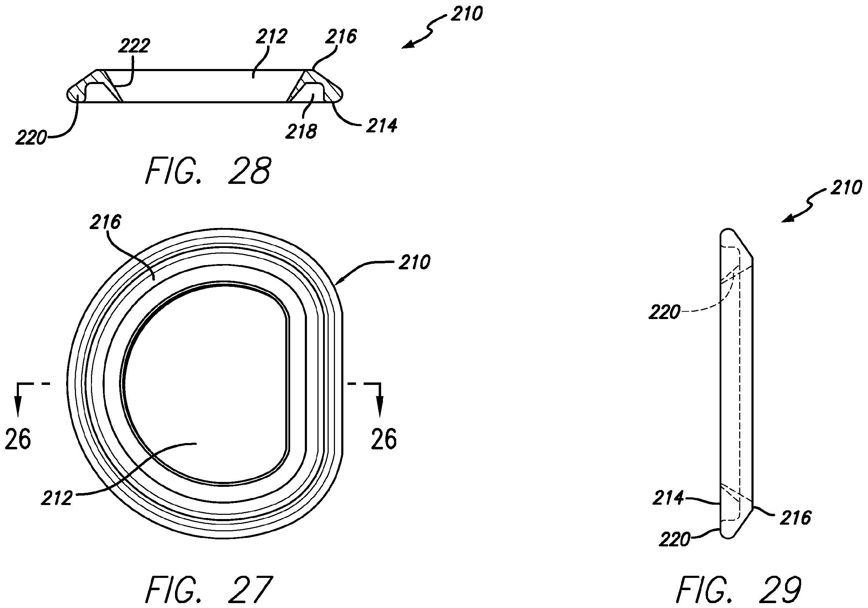

Latch mechanism 10 includes a resilient and flexible seal member such as a gasket 210 as shown in Figs. 27-29. Gasket 210 is generally D-shaped and is configured to fit within chamber 80 of receptacle 70. Gasket 210 is generally annular and includes a generally D-shaped central aperture 212 which is adapted to align with aperture 82 in the bottom wall 81 of receptacle 70 such that arm 98 of rear bolt 94 extends through aperture 82 of receptacle 70 and aperture 212 of gasket 210. Gasket 210 includes a bottom end 214 adapted to sealingly engage the bottom wall 81 of receptacle 70 and a top end 216 adapted to sealingly engage bottom surface 114 of head 110 of bolt 90 when bolt 90 is in the retracted position, and latch mechanism 10 is in the latched condition. Top end 216 of gasket 210 may include a generally planar peripheral surface adapted to engage bottom surface 114 of head 110. Bottom end 214 of gasket 210 includes a generally annular groove 218 forming a peripheral outer rim 220 and a peripheral inner web 222. The top surface of top end 216 of gasket 210 is pressed into sealingly engagement with bottom surface 114 of head 110 of bolt 90, and rim 220 and web 222 of bottom end 214 of gasket 210 are pressed into sealingly engagement with bottom wall 81 of receptacle 70, when bolt 90 is in the retracted position and latch mechanism 10 is the latched condition, such that gasket 210 creates a fluid-tight seal between mounting bracket 30 and bolt 90 and around aperture 82 of receptacle 70.

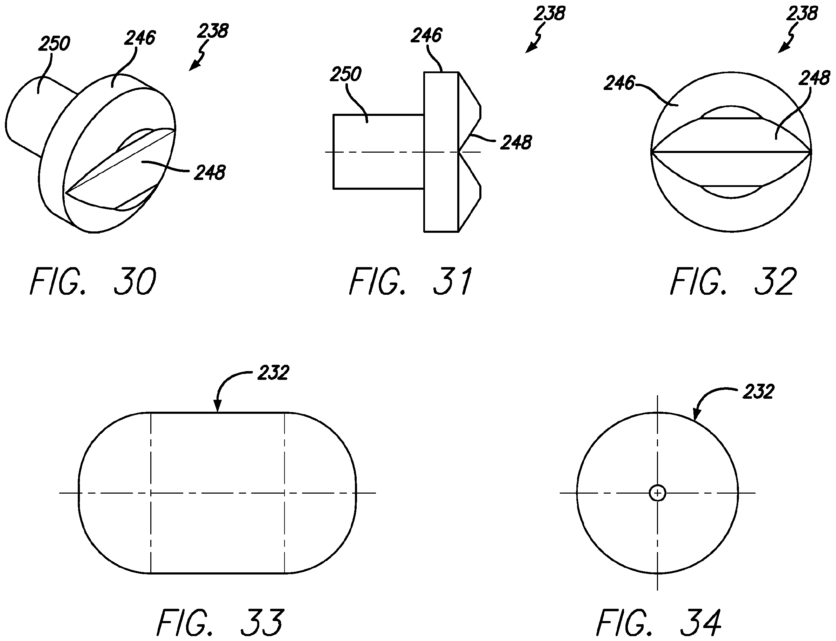

Latch mechanism 10 includes a detent mechanism 230. Detent mechanism 230 includes a detent member 232. Detent member 232, as shown in Figs. 33 and 34, may comprise a generally cylindrical roller having a generally cylindrical center shaft and generally hemispherical shaped ends, or alternatively generally planar ends. In addition, detent member 232 may alternatively comprise a generally spherical ball. Detent member 232 is preferably formed from metal. Detent mechanism 230 includes an adjustable biasing mechanism 234 for providing a selectively adjustable and resilient biasing force to detent member 232.

As shown in Fig. 6, biasing mechanism 234 additionally comprises a resilient biasing member 236, such as a helical coil spring, a plunger 238, and a adjustable base member 240. Biasing mechanism 234 is located within chamber 50 of mounting bracket 30. Biasing member 236 extends between a first end 242 and a second end 244 generally concentrically along axis 52. Plunger 238 includes a head 246 having a generally V-shaped recess 248 configured to receive a portion of detent member 232. Plunger 238 also includes a generally cylindrical stem 250 extending from head 246 along axis 52. Stem 250 extends within second end 244 of biasing member 236 such that second end 244 engages head 246. Base member 240 includes a head 252 and a stem 254 that extends within first end 242 of biasing member 236. First end 242 of biasing member 236 engages head 252. Biasing member 236 resiliently biases plunger 238 into engagement with detent member 232 and thereby resiliently biases detent member 232 along axis 52 toward arm 98 of bolt 90 and into detent 106 of arm 98 as shown in Fig. 6.

The outer circumferential surface of head 252 of base member 240 threadably engages threads in chamber 50 of mounting bracket 30 such that selective rotation of base member 240 about axis 52 moves base member 240 along axis 52 in a desired direction to either compress or expand biasing member 236 to a desired extent such that biasing member 236 applies a desired resilient biasing force to detent member 232 for engagement with detent 106. When base member 240 is properly positioned and biasing member 236 is compressed as desired, the threads of head 252 may be deformed through aperture 60 to prevent further rotation of base member 240 with respect to mounting bracket 30.

When detent member 232 is in an extended position as shown in Fig. 6, a portion of detent member 232 projects outwardly from aperture 56 of end wall 54 of mounting bracket 30 and is located within detent 106 of arm 98 of bolt 90 to inhibit pivotal movement of bolt 90 about axis 66 with respect to mounting bracket 30. Detent member 232 thereby releasably locks bolt 90 to mounting bracket 30 in the retracted position such that first member 12 is securely coupled to second member 14. However, when a sufficiently large force is applied to engagement member 170 of bolt 90 in a generally downward direction as viewed in Fig. 6, the retention force with which biasing member 236 presses detent member 232 into detent 106 of bolt 90 may be overcome such that arm 98 of bolt 90 presses detent member 232 toward base member 240 to a retracted position and compresses biasing member 236, such that bolt 90 may rotate in a generally clockwise direction about pivot axis 66 with respect to mounting bracket 30. When detent member 232 is no longer located within detent 106, bolt 90 may easily pivot about pivot axis 66 with respect to mounting bracket 30 to a retracted position as shown in Fig. 2 wherein stop members 188 engage second ends 48 of side walls 36 and first member 12 is released from second member 14. Outer surface 104 of arm 98 slides along detent member 232 as bolt 90 pivots about axis 66 between the retracted position shown in Fig. 6 and the extended position as shown in Fig. 2. Bolt 90 may be manually returned to the retracted position as shown in Fig. 6 by pressing downwardly on head 110 of bolt 90 to pivot bolt 90 in a counterclockwise direction about axis 66 with respect to mounting bracket 30 until detent member 232 is located within detent 106 of bolt 90.

In the event an excess-pressure condition is encountered, wherein an excess pressure of a predetermined pressure is applied to second surface 18 of first member 12, which results in a predetermined excess force being applied to engagement member 170 of bolt 90, the excess force will overcome the force by which detent member 232 engages arm 98 of bolt 90 such that arm 98 of bolt 90 will move detent member 232 along axis 52 in a direction away from bolt 90 and toward base member 240. Bolt 90 will then be free to pivot in a generally clockwise direction about axis 66 with respect to mounting bracket 30 toward an extended position as shown in Fig. 2, whereby engagement member 170 is released from second member 14. Arm 98 of bolt 90 extends and passes through aperture 82 of receptacle 70 as bolt 90 pivots in a clockwise direction about axis 66 with respect to mounting bracket 30. First member 12 may thereby be automatically removed from, or repositioned with respect to, second member 14 as a result of the excess-pressure condition, preventing or reducing damage that may otherwise be caused to first member 12 and second member 14. Bolt 90 may be manually reset to the retracted position with respect to mounting bracket 30 by pressing downwardly on head 110 of bolt 90.

## Claims

1. A latch mechanism (10) comprising:
a mounting bracket (30) having a body portion and at least one flange portion;
the body portion having at least one wall defining a chamber (50);
a bolt (90) movably carried on the mounting bracket having a latched position and an unlatched position;
a receptacle (70) defined in the mounting bracket;
a detent mechanism (230) carried in the chamber; **characterised in that**
the bolt (90) includes a front bolt (96) attached to a rear bolt (94);
a head portion of the rear bolt is positioned relative to the receptacle (70) in the latched position;
at least a portion of the rear bolt is traveling through the receptacle (70) when unlatching the latch mechanism and is engageable with the detent mechanism (230) in the latched position, wherein
at least one of the rear bolt (94) and the front bolt (96) have a projection, and the other of the bolts having a recess (156), the projection (134) being engageable in the recess for attaching the front bolt to the rear bolt (94) and wherein the latch mechanism comprises a fastener (192) coupled to the front bolt (96) and the rear bolt (94) for connecting the bolts.

2. The latch mechanism (10) of claim 1, further comprising a gasket (210) on at least one of the receptacle and the head portion of the rear bolt (94), the gasket providing a releasable seal between the head and the receptacle in the latched position.

3. The latch mechanism (10) of claim 1 or 2, wherein the recess is a generally rectangular recess or a slot (156) which is adapted to matingly receive the projection (134).

4. The latch mechanism (10) of claim 3, wherein the front bolt (96) includes a rear wall (154) having the generally rectangular recess or slot (156) that extends transversely between side walls (152) and wherein slot (156) is adapted to matingly receive projection (134) of front wall (128) of rear bolt (94).

5. The latch mechanism (10) of one of the preceding claims, wherein the rear bolt (94) includes a curved arm (98) extending between a first end (100) and a second end (102), wherein the arm (98) extends through an aperture (82) in the mounting bracket (30), wherein the rear bolt (94) includes a leg (120) that extends from a first end (122) to a second end (124), wherein second end (124) of leg (122) is attached to first end (100) of arm (98).

6. The latch mechanism (10) of claim 5, wherein rear bolt (94) of bolt (90) includes a head (110), in particular generally in the form of a planar plate, attached to second end (102) of arm (98).

7. The latch mechanism (10) of claim 6, wherein head (110) has a generally D-shaped peripheral edge (112) adapted to generally conform with a D-shaped inner surface (78) of receptacle (70) and wherein head (110) includes a generally planar bottom surface (114) and a spaced apart and generally parallel planar top surface (116).

8. The latch mechanism (10) of claim 6 or 7, wherein head (110) is adapted to be located within chamber (80) of receptacle (70) when bolt (90) is in the retracted position and the latch mechanism (10) is in the latched condition.

9. The latch mechanism (10) of one of the preceding claims, wherein the mounting bracket comprises mounting ears (62), wherein each mounting ear (62) includes a generally circular aperture (64) coaxially aligned with one another about a pivot axis (66) and wherein the bolt (90) is pivotally coupled to mounting bracket (30) by a shaft (92) that extends concentrically along a pivot axis (66) and into apertures (64) of mounting ears (62).

10. The latch mechanism (10) of claim 9, wherein
when bolt (90) is in a retracted position with respect to mounting bracket (30) latch mechanism (10) is in a latched condition and whereby latch mechanism (10) releasably latches first member (12) to second member (14) and
wherein bolt (90) is pivotal with respect to mounting bracket (30) about pivot axis (66) from the retracted position toward an extended position and that latch mechanism (10) is in the unlatched condition and first member (12) may be removed from, or displaced with respect to, second member (14).

11. The latch mechanism (10) of one of the preceding claims, wherein the fastener (192) removably couples front bolt (96) to rear bolt (94), and wherein fastener (192) includes a threaded generally cylindrical shaft (194) adapted to extend closely within a first bore portion (180) of front bolt (96) and to threadably engage a bore (142) of rear bolt (94) and wherein a head (196) is attached to shaft (194).

12. The latch mechanism (10) of one of the preceding claims, wherein front bolt (96) of bolt (90) extends from a first end (148) to a second end (150) and wherein second end (150) of front bolt (96) includes an engagement member (170) having a tip (172) adapted to engage second surface (24) of second member (14) when latch mechanism (10) is in the latched condition.

13. The latch mechanism (10) of one of the preceding claims, wherein latch mechanism (10) includes a detent mechanism (230) and wherein detent mechanism (230) includes a detent member (232) and an adjustable biasing mechanism (234) for providing a selectively adjustable and resilient biasing force to detent member (232), and in particular wherein detent member (232) comprises a generally cylindrical roller having a generally cylindrical center shaft and generally hemispherical shaped ends or alternatively generally planar ends or a generally spherical ball.

14. The latch mechanism (10) of claim 13, wherein biasing mechanism (234) additionally comprises a resilient biasing member (236), such as a helical coil spring, a plunger (238), and an adjustable base member (240) and wherein biasing mechanism 234 is located within a chamber (50) of mounting bracket (30).

15. The latch mechanism (10) of any one of the preceding claims, further comprising at least one stop carried on the front bolt (96).

## Patentansprüche

1. Verriegelungsmechanismus (10), umfassend:
eine Montageklammer (30) mit einem Körperabschnitt und mindestens einem Flanschabschnitt;
wobei der Körperabschnitt mindestens eine Wand aufweist, die eine Kammer (50) definiert;
einen Bolzen (90), der beweglich auf der Montageklammer getragen wird, aufweisend eine verriegelte Position und eine entriegelte Position;
einen Behälter (70), der in der Montageklammer definiert ist;
einen Haltemechanismus (230), der in der Kammer getragen ist;
**dadurch gekennzeichnet, dass**
der Bolzen (90) einen vorderen Bolzen (96) einschließt, der an einen hinteren Bolzen (94) befestigt ist;
ein Kopfabschnitt des hinteren Bolzens mit Bezug auf den Behälter (70) in der verriegelten Position positioniert ist;
sich mindestens ein Abschnitt des hinteren Bolzens durch den Behälter (70) bewegt, wenn der Verriegelungsmechanismus entriegelt wird, und in der verriegelten Position mit dem Haltemechanismus (230) eingegriffen werden kann, wobei
mindestens einer des hinteren Bolzens (94) und des vorderen Bolzens (96) einen Vorsprung und der andere der Bolzen eine Aussparung (156) aufweist, wobei der Vorsprung (134) in die Aussparung eingegriffen werden kann, um den vorderen Bolzen an den hinteren Bolzen (94) zu befestigen, und wobei der Verriegelungsmechanismus eine Befestigungsvorrichtung (192) umfasst, die mit dem vorderen Bolzen (96) und dem hinteren Bolzen (94) zur Verbindung der Bolzen gekoppelt ist.

2. Verriegelungsmechanismus (10) nach Anspruch 1, weiter umfassend eine Dichtung (210) auf mindestens einem des Behälters und des Kopfabschnitts des hinteren Bolzens (94), wobei die Dichtung ein lösbares Siegel zwischen dem Kopf und dem Behälter in der verriegelten Position bereitstellt.

3. Verriegelungsmechanismus (10) nach Anspruch 1 oder 2, wobei die Aussparung eine im Allgemeinen rechtwinklige Aussparung oder ein Schlitz (156) ist, die/der ausgelegt ist, um den Vorsprung (134) passend aufzunehmen.

4. Verriegelungsmechanismus (10) nach Anspruch 3, wobei der vordere Bolzen (96) eine hintere Wand (154) einschließt, aufweisend die/den im Allgemeinen rechtwinklige(n) Aussparung oder Schlitz (156), die/der sich quer zwischen Seitenwänden (152) erstreckt, und wobei der Schlitz (154) ausgelegt ist, um den Vorsprung (134) der vorderen Wand (128) des hinteren Bolzens (94) passend aufzunehmen.

5. Verriegelungsmechanismus (10) nach einem der vorhergehenden Ansprüche, wobei der hintere Bolzen (94) einen gekrümmten Arm (98) einschließt, der sich zwischen einem ersten Ende (100) und einem zweiten Ende (102) erstreckt, wobei sich der Arm (98) durch eine Öffnung (82) in der Montageklammer (30) erstreckt, wobei der hintere Bolzen (94) einen Fuß (120) einschließt, der sich von einem ersten Ende (122) zu einem zweiten Ende (124) erstreckt, wobei das zweite Ende (124) des Fußes (122) an das erste Ende (100) des Arms (98) befestigt ist.

6. Verriegelungsmechanismus (10) nach Anspruch 5, wobei der hintere Bolzen (94) vom Bolzen (90) einen Kopf (110) einschließt, insbesondere im Allgemeinen in Form einer planaren Platte, die an das zweite Ende (124) des Arms (98) befestigt ist.

7. Verriegelungsmechanismus (10) nach Anspruch 6, wobei der Kopf (110) eine im Allgemeinen D-förmige sphärische Kante (112) aufweist, die ausgelegt ist, um im Allgemeinen mit einer D-förmigen inneren Fläche (78) des Behälters (70) übereinzustimmen, und wobei der Kopf (110) eine im Allgemeinen planare untere Fläche (114) und eine beabstandete und im Allgemeinen parallele planare obere Fläche (116) einschließt.

8. Verriegelungsmechanismus (10) nach Anspruch 6 oder 7, wobei der Kopf (110) ausgelegt ist, um sich innerhalb der Kammer (80) des Behälters (70) zu befinden, wenn sich der Bolzen (90) in der zurückgezogenen Position befindet und sich der Verriegelungsmechanismus (10) im verriegelten Zustand befindet.

9. Verriegelungsmechanismus (10) nach einem der vorhergehenden Ansprüche, wobei die Montageklammer Montagelaschen (62) umfasst, wobei jede Montagelasche (62) eine im Allgemeinen ringförmige Öffnung (64) einschließt, die koaxial miteinander um eine Schwenkachse (66) ausgefluchtet sind, und wobei der Bolzen (90) schwenkbar mit der Montageklammer (30) durch eine Welle (92) gekoppelt ist, die sich konzentrisch entlang einer Schwenkachse (66) und in Öffnungen (64) von Montagelaschen (62) erstreckt.

10. Verriegelungsmechanismus (10) nach Anspruch 9, wobei
wenn sich der Bolzen (90) in einer zurückgezogenen Position mit Bezug auf die Montageklammer (30) befindet, sich der Verriegelungsmechanismus (10) in einem verriegelten Zustand befindet, wodurch der Verriegelungsmechanismus (10) entfernbar das erste Element (12) mit dem zweiten Element (14) verriegelt, und
wobei der Bolzen (90) mit Bezug auf die Montagklammer (30) um die Schwenkachse (66) aus der zurückgezogenen Position in eine erweiterte Position schwenkbar ist, und sich dieser Verriegelungsmechanismus (10) im entriegelten Zustand befindet und das erste Element (12) vom zweiten Element (14) entfernt oder mit Bezug auf dieses verschoben werden kann.

11. Verriegelungsmechanismus (10) nach einem der vorhergehenden Ansprüche, wobei die Befestigungsvorrichtung (192) entfernbar den vorderen Bolzen (96) an den hinteren Bolzen (94) koppelt, und wobei das Befestigungselement (192) eine gewindegeschnittene im Allgemeinen zylindrische Welle (194) umfasst, die ausgelegt ist, um sich eng innerhalb eines ersten Bohrungsabschnitts (180) des vorderen Bolzens (96) zu erstrecken und schraubend eine Bohrung (142) des hinteren Bolzens (94) einzugreifen, und wobei ein Kopf (196) an die Welle (194) befestigt ist.

12. Verriegelungsmechanismus (10) nach einem der vorhergehenden Ansprüche, wobei sich der vordere Bolzen (96) vom Bolzen (90) von einem ersten Ende (122) zu einem zweiten Ende (150) erstreckt, und wobei das zweite Ende (150) des vorderen Bolzens (96) ein Eingriffselement (170) einschließt, das eine Spitze (172) aufweist, die ausgelegt ist, um die zweite Fläche (24) des zweiten Elements (14) einzugreifen, wenn sich der Verriegelungsmechanismus (10) im verriegelten Zustand befindet.

13. Verriegelungsmechanismus (10) nach einem der vorhergehenden Ansprüche, wobei der Verriegelungsmechanismus (10) einen Haltemechanismus (230) einschließt, und wobei der Haltemechanismus (230) ein Halteelement (232) und einen einstellbaren Vorspannungsmechanismus (234) einschließt, um dem Halteelement eine selektiv einstellbare und elastische Vorspannungskraft (232) bereitzustellen, und insbesondere wobei das Halteelement (232) einen im Allgemeinen zylindrischen Roller umfasst, der eine im Allgemeinen zylindrische Welle und im Allgemeinen halbkugelförmige Enden oder alternativ im Allgemeinen planare Enden oder einen im Allgemeinen sphärischen Ball umfasst.

14. Verriegelungsmechanismus (10) nach Anspruch 13, wobei der Vorspannungsmechanismus (234) zusätzlich ein elastisches Vorspannungselement (236) umfasst, wie z. B. eine Schraubenfeder, einen Stößel (238) und ein einstellbares Basiselement (240), und wobei sich der Vorspannungsmechanismus (234) innerhalb einer Kammer (50) der Montageklammer (30) befindet.

15. Verriegelungsmechanismus (10) nach einem der vorhergehenden Ansprüche, weiter umfassend mindestens einen Stopp, der auf dem vorderen Bolzen (96) getragen wird.

## Revendications

1. Mécanisme de verrouillage (10) comprenant :
une console de montage (30) ayant une partie de corps et au moins une partie de bride ;
la partie de corps ayant au moins une paroi définissant une chambre (50) ;
un boulon (90) porté, de manière mobile, sur la console de montage ayant une position verrouillée et une position déverrouillée ;
un réceptacle (70) défini dans la console de montage ;
un mécanisme d'encliquetage (230) porté dans la chambre ; **caractérisé en ce que** :
le boulon (90) comprend un boulon avant (96) fixé à un boulon arrière (94) ;
une partie de tête du boulon arrière est positionnée par rapport au réceptacle (70) dans la position verrouillée ;
au moins une partie du boulon arrière se déplace à travers le réceptacle (70) lors du déverrouillage du mécanisme de verrouillage et peut se mettre en prise avec le mécanisme d'encliquetage (230) dans la position verrouillée, dans lequel :
au moins l'un parmi le boulon arrière (94) et le boulon avant (96) a une saillie, et l'autre des boulons ayant un évidement (156), la saillie (134) pouvant se mettre en prise dans l'évidement afin de fixer le boulon avant au boulon arrière (94), et le mécanisme de verrouillage comprenant une fixation (192) couplée au boulon avant (96) et au boulon arrière (94) pour raccorder les boulons.

2. Mécanisme de verrouillage (10) selon la revendication 1, comprenant en outre un joint (210) sur au moins l'un parmi le réceptacle et la partie de tête du boulon arrière (94), le joint fournissant un joint d'étanchéité amovible entre la tête et le réceptacle dans la position verrouillée.

3. Mécanisme de verrouillage (10) selon la revendication 1 ou 2, dans lequel l'évidement est un évidement généralement rectangulaire ou une fente (156) qui est adapté(e) pour recevoir, par couplage, la saillie (134).

4. Mécanisme de verrouillage (10) selon la revendication 3, dans lequel le boulon avant (96) comprend une paroi arrière (154) ayant l'évidement ou la fente généralement rectangulaire (156) qui s'étend de manière transversale entre les parois latérales (152) et dans lequel la fente (156) est adaptée pour recevoir, par couplage, la saillie (134) de la paroi avant (128) du boulon arrière (94).

5. Mécanisme de verrouillage (10) selon l'une des revendications précédentes, dans lequel le boulon arrière (94) comprend un bras incurvé (98) s'étendant entre une première extrémité (100) et une seconde extrémité (102), le bras (98) s'étendant à travers une ouverture (82) dans la console de montage (30), le boulon arrière (94) comprenant une patte (120) qui s'étend à partir d'une première extrémité (122) jusqu'à une seconde extrémité (124), la seconde extrémité (124) de la patte (122) étant fixée à la première extrémité (100) du bras (98).

6. Mécanisme de verrouillage (10) selon la revendication 5, dans lequel le boulon arrière (94) du boulon (90) comprend une tête (110), se présentant en particulier généralement sous la forme d'une plaque planaire, fixée à la seconde extrémité (102) du bras (98).

7. Mécanisme de verrouillage (10) selon la revendication 6, dans lequel la tête (110) a un bord périphérique généralement en forme de D (112) adapté pour se conformer généralement à une surface interne en forme de D (78) du réceptacle (70) et dans lequel la tête (110) comprend une surface inférieure généralement planaire (114) et une surface supérieure planaire espacée et généralement parallèle (116).

8. Mécanisme de verrouillage (10) selon la revendication 6 ou 7, dans lequel la tête (110) est adaptée pour être positionnée à l'intérieur de la chambre (80) du réceptacle (70) lorsque le boulon (90) est dans la position rétractée et que le mécanisme de verrouillage (10) est dans l'état verrouillé.

9. Mécanisme de verrouillage (10) selon l'une des revendications précédentes, dans lequel la console de montage comprend des oreilles de montage (62), chaque oreille de montage (62) comprenant une ouverture généralement circulaire (64) alignée, de manière coaxiale, avec une autre, autour d'un axe de pivot (66), et le boulon (90) étant couplé, de manière pivotante à la console de montage (30) par un arbre (92) qui s'étend de manière concentrique le long d'un axe de pivot (66) et dans des ouvertures (64) des oreilles de montage (62).

10. Mécanisme de verrouillage (10) selon la revendication 9, dans lequel :
lorsque le boulon (90) est dans une position rétractée par rapport à la console de montage (30), le mécanisme de verrouillage (10) est dans un état verrouillé de sorte que le mécanisme de verrouillage (10) verrouille, de manière amovible, le premier élément (12) sur le second élément (14), et
le boulon (90) pivotant par rapport à la console de montage (30) autour de l'axe de pivot (66) de la position rétractée vers une position étendue et le mécanisme de verrouillage (10) étant dans l'état déverrouillé et le premier élément (12) pouvant être retiré de ou déplacé par rapport au second élément (14).

11. Mécanisme de verrouillage (10) selon l'une des revendications précédentes, dans lequel la fixation (192) couple, de manière amovible, le boulon avant (96) au boulon arrière (94), et dans lequel la fixation (192) comprend un arbre fileté généralement cylindrique (194) adapté pour s'étendre étroitement à l'intérieur d'une première partie d'alésage (180) du boulon avant (96) et pour mettre en prise, par filetage, un alésage (142) du boulon arrière (94) et dans lequel une tête (196) est fixée à l'arbre (194).

12. Mécanisme de verrouillage (10) selon l'une des revendications précédentes, dans lequel le boulon avant (96) du boulon (90) s'étend à partir d'une première extrémité (148) jusqu'à une seconde extrémité (150) et dans lequel la seconde extrémité (150) du boulon avant (96) comprend un élément de mise en prise (170) ayant une pointe (172) adaptée pour mettre en prise la seconde surface (24) du second élément (14) lorsque le mécanisme de verrouillage (10) est dans l'état verrouillé.

13. Mécanisme de verrouillage (10) selon l'une des revendications précédentes, dans lequel le mécanisme de verrouillage (10) comprend un mécanisme d'encliquetage (230) et dans lequel le mécanisme d'encliquetage (230) comprend un élément d'encliquetage (232) et un mécanisme de sollicitation ajustable (234) pour fournir une force de sollicitation sélectivement ajustable et résiliente à l'élément d'encliquetage (232), et en particulier dans lequel l'élément d'encliquetage (232) comprend un rouleau généralement cylindrique ayant un arbre central généralement cylindrique et des extrémités de forme généralement hémisphérique ou en variante des extrémités généralement planaires ou une bille généralement sphérique.

14. Mécanisme de verrouillage (10) selon la revendication 13, dans lequel le mécanisme de sollicitation (234) comprend, de plus, un élément de sollicitation résilient (236) tel qu'un ressort hélicoïdal, un piston plongeur (238) et un élément de base ajustable (240) et dans lequel le mécanisme de sollicitation (234) est positionné à l'intérieur d'une chambre (50) de la console de montage (30).

15. Mécanisme de verrouillage (10) selon l'une quelconque des revendications précédentes, comprenant en outre au moins une butée portée sur le boulon avant (96).
